Europäisches Patentamt

European Patent Office

Office européen des brevets

(19)

(11) **EP 1 310 885 A2**

(12) **EUROPEAN PATENT APPLICATION**

(43) Date of publication:
**14.05.2003 Bulletin 2003/20**

(51) Int Cl.⁷: **G06F 17/30**

(21) Application number: **02257759.7**

(22) Date of filing: **08.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventor: **Minor, James M.**<br>**Los Altos, California 94022 (US)** |
| (30) Priority: **09.11.2001 US 986746** | (74) Representative: **Hackney, Nigel John et al**<br>**Mewburn Ellis,**<br>**York House,**<br>**23 Kingsway**<br>**London WC2B 6HP (GB)** |
| (71) Applicant: **Agilent Technologies, Inc.**<br>**Loveland, CO 80537-0599 (US)** | |

(54) **System and method for dynamic data clustering**

(57)    A system and method for dynamically identifying clusters of related data in a database uses a probe to identify the clusters. These clusters, also known as density patterns, are identified by launching the probe from an initial position in a data space associated with the data comprised of a plurality of data points. Each of the data points attracts the probe to itself. Distant data points attract the probe to a lesser extent than do proximate data points. In this manner, the probe is drawn along a trajectory toward an equilibrium point. Once the equilibrium point is reached, a cluster is identified and its location optionally stored. Additional probes are launched from different initial positions in the data space to identify other clusters that may exist in the data space until no unique clusters are identified. The collection of identified clusters is representative of a number and, in some embodiments of the present invention, a general location of related data within the data space.

FIG. 1

## Description

The present invention relates generally to identifying related data in a database and more particularly to a system and method for dynamically determining clusters of related data in a database.

Vast amounts of data are being collected and stored throughout the world. This data may range, for example, from census and demographic information of a population of people to genetic information regarding a particular individual and from astronomical information of a galaxy to physical properties of sub-atomic particles. One difficulty associated with this information is a lack of tools to fully analyze, and therefore, appreciate, the content that resides within the collected information.

Conventional cluster analysis tools have been developed to analyze relationships that may exist among the data in the databases. Clustering tools, which are sometimes also referred to as classification algorithms, organize data into meaningful groups or "clusters." Clustering tools are open used when no *a priori* hypotheses exist. In other words, clustering tools are used to discover otherwise unknown relationships that may exist within the data.

Several conventional clustering tools have been developed including, for example, k-means clustering and self-organizing maps. These conventional clustering tools are generally well known and available (*e.g.*, JMP Statistical Discovery Software available from SAS Institute, Cary, NC).

One problem generally associated with these types of conventional clustering tools is that they require an *a priori* estimate of the number of clusters that exist in the data. Once an estimate of the number of clusters is determined, these conventional clustering tools force the data into exactly that number of clusters. As is well documented, different estimates of the number of clusters can produce very different results with the same data thereby reducing the effectiveness of these tools.

What is needed is an improved system and method for dynamic data clustering.

The present invention provides a system and method for dynamically identifying clusters of related data in a database. According to some embodiments of the present invention, clusters of related data, or density patterns, are identified by launching a probe from an initial position in a data space associated with the data. Each of the data points in the data space attracts the probe to the data point. Distant data points, or collections of data points referred to as clusters, attract the probe to a lesser extent than proximate data points do. The probe is drawn along a trajectory toward an equilibrium point. Once the equilibrium point is reached, a cluster is identified and its location optionally stored. Additional probes are launched from different initial positions in the data space to identify other clusters that may exist therein until no unique clusters are identified. The collection of identified clusters is representative of a number and, in some embodiments of the present invention, a general location of related data within the database.

One aspect of the present invention not found in conventional clustering techniques is that an *a priori* estimate or knowledge of a number of clusters within the database is not required. In other words, the present invention dynamically identifies clusters within the data space without requiring a number of clusters as an input to its operation.

This and other aspects of the present invention will become apparent from the following drawings and description.

### Brief Description of the Drawings

The present invention is described with reference to the accompanying drawings. In the drawings, like reference numbers indicate identical or functionally similar elements. Additionally, the left-most digit(s) of a reference number identifies the drawing in which the reference number first appears.

FIG. 1 illustrates a system according to an embodiment of the present invention.

FIG. 2 illustrates a data space formed by data records in a database according to an embodiment of the present invention.

FIG. 3 illustrates an operation of an embodiment of the present invention that identifies a number of and a location for clusters in a data space.

FIG. 4 illustrates an operation of identifying a particular cluster in the data space according to an embodiment of the present invention.

FIG. 5 illustrates a trajectory formed by an embodiment of the present invention as a cluster is identified in the data space.

FIG. 6 illustrates various clusters identified in the data space in accordance with an embodiment of the present invention.

FIG. 7 illustrates a plot of a potential function that may be used in one embodiment of the present invention.

FIG. 8 illustrates a linear display that may be used to convey information to a user according to one embodiment of the present invention.

FIG. 9 illustrates indicia that may be used to convey a relative value and sign of a parameter according to one embodiment of the present invention.

### Detailed Description

The present invention provides a system and method for dynamically identifying clusters of related data. Generally speaking, according to the present invention, clusters of related data (also known as density patterns) are identified by probing the data in the database. The database may be comprised of a plurality of records each having one or more data fields. The number of data fields, or subset of the number of data fields, "M" in the database describes an M-dimensional "data space" representative of all possible combinations of data values for these data fields. The plurality of data records in the database correspond to "N" data points within that data space.

According to the present invention, a probe is "launched" from an initial position in the data space. Each of the data points in the data space operates on the probe by attracting the probe to the data point. Distant data points attract the probe to a lesser extent than proximate data points do. Various data points operate on the probe, drawing it along a "trajectory" toward an equilibrium point within a group of data points or "cluster" where the probe remains at "rest." Once the equilibrium point is determined in this manner (and a cluster associated therewith identified), another probe is launched from a different initial position in the data space to identify another cluster that may exist therein. Additional probes are launched until no other unique clusters are identified. The collection of identified clusters is representative of a number and, in some embodiments of the present invention, a general location of related data within the database.

One aspect of the present invention not found in conventional clustering techniques is that an *a priori* estimate or knowledge of a number of clusters within the database is not required. In other words, the present invention dynamically identifies clusters within the data space without requiring a number of clusters as an input to its operation. This is discussed in further detail below.

An overview of a system operating according to the present invention for dynamically identifying clusters of related data in a database is first presented. This is followed by a discussion of the mathematical model underlying the methods described herein, including exemplary approaches for identifying clusters in a timely manner. Next, various applications of these methods for different types of databases are presented. Finally, a useful mechanism for displaying the identified relationships that exist among the data is described.

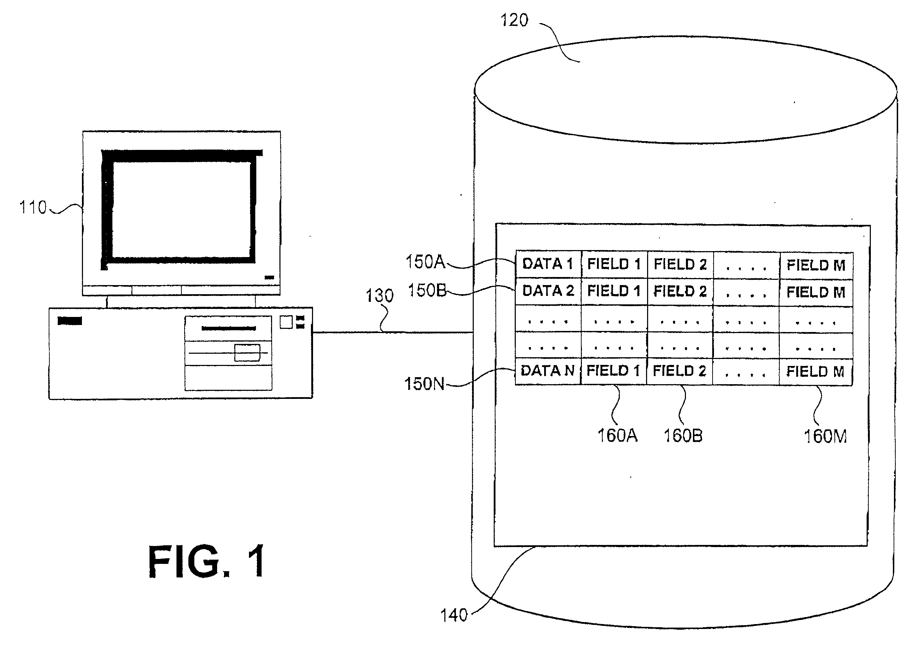

FIG. 1 illustrates a system 100 according to an embodiment of the present invention. System 100 includes a computer processor 110 operatively coupled to a data storage device 120 via a communication link 130. Computer processor 110 may be a general-purpose microprocessor or a bank of parallel processors or any other computer processing platform as would be apparent. Communication link 130 may be an internal or external data bus, a network (wired or wireless), or any other communication link for facilitating the access and transfer of data between computer processor 110 and data storage device 120 or other source of data (not otherwise illustrated). Data storage device 120 may include a single storage medium or bank of storage media capable of storing a database 140, or other collection of data, as would be apparent.

Database 140 may be a collection of data organized and accessed in a variety of ways according to well-known techniques. Generally, database 140 includes N number of data records 150 (illustrated in FIG. 1 as a data record 150A, a data record 150B, etc., and a data record 150N). Each data record 150 includes M number of data fields 160 (illustrated in FIG. 1 as a data field 160A, a data field 160B, and a data field 160M). As would be apparent, database 140 may be a subset of a larger database (not illustrated) that has greater than N number of data records 150 and/or greater than M number of data fields 160. As would also be apparent, database 140 may be a real-time stream of data collected from various sensors, measurement devices, or the like, during an information gathering session, such as, for example, an experiment.

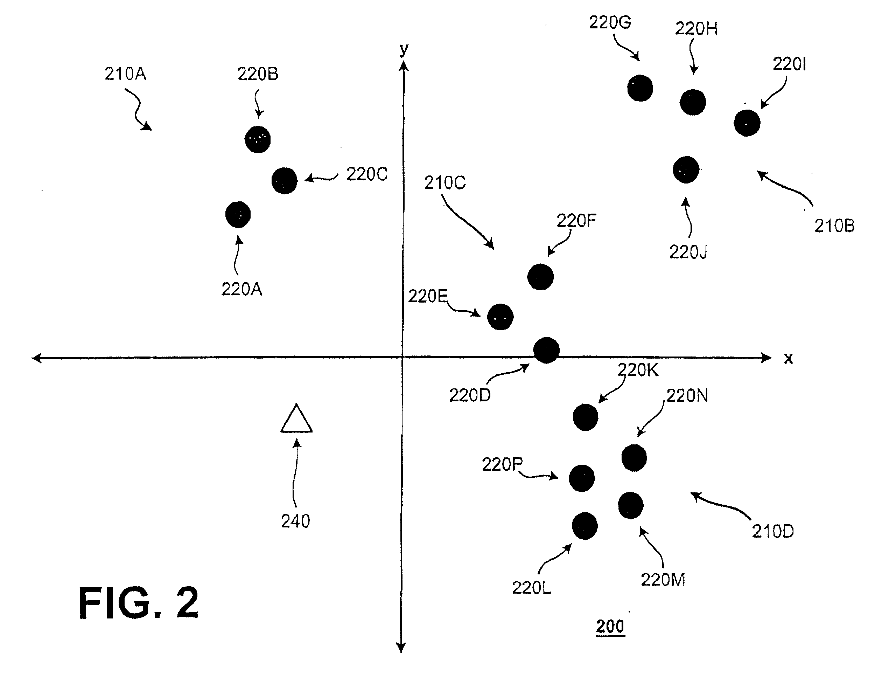

The present invention is now described with reference to an exemplary data space 200 as illustrated in FIG. 2. Each of data records 150 may be considered a data point 220 (illustrated collectively as data points 220A-P) in an M-dimensional data space 200. As illustrated in FIG. 2, data space 200 is a two-dimensional space (selected for purposes of ease of illustration and understanding, and not by way of limitation) having an x-axis and a y-axis. In data space 200, each data point 220 corresponds to a data record 150 having at least a first data field 160A and a second data field 160B, respectively.

In one embodiment of the present invention, data space 200 is a normalized data space. In this embodiment, the data included in data records 150 is normalized across data fields 160 so that the data within these data fields has a predetermined mean and a predetermined variance. For example, the data may be normalized to have a mean of zero and a variance of one. Other predetermined means and variances may be used as would be apparent. This normalization is useful particularly where units of measurement differ across data fields 160.

As illustrated in FIG. 2, various data points 220 have a closer relationship to some data points 220 than to other data points 220. More specifically, data point 220A is more closely related to data points 220B and 220C than it is to the other data points 220 with regard to data fields 160A and 160B. Likewise, data point 220J is more closely related to data points 220G, 220H, and 220I than it is to the other data points 220, again with regard to data fields 160A and 160B. Note that for other data spaces 200 having other data fields 160 (*i.e.*, having different x-axes and/or y-axes and/or additional axes), relationships among these data points 220 may change as would be apparent.

While the relationships among data points 220 illustrated in FIG. 2 are easily identified by a casual human observer, other relationships are less easily identified, particularly as the number of data points (N) increases or as the number of data fields (M) increases. Furthermore, computers are unable (at least at present) to make even the simplest of "casual observations." The present invention provides a mechanism for dynamically identifying clusters of related data in data space 200.

According to the present invention, a probe 240 is inserted or "launched" into data space 200 at an initial location. In an embodiment of the present invention, probe 240 is a mathematical construct that operates to identify clusters of related data in data space 200. Probe 240 is attracted to data points 220 based on a relative proximity of probe 240 to each of data points 220. Proximate data points 220 attract probe 240 more than distant data points 220. Probe 240 "moves" through data space 200 based on the attraction of data points 220 until probe 240 settles at an equilibrium point. Various equilibrium points may be reached within data space 200 depending upon the initial location selected for probe 240.

In one embodiment, the initial location for probe 240 is randomly selected from among all possible locations in data space 200. In other embodiments, the initial location is selected in various ways tailored, for example, to reduce computation time, etc., as will be discussed in further detail below.

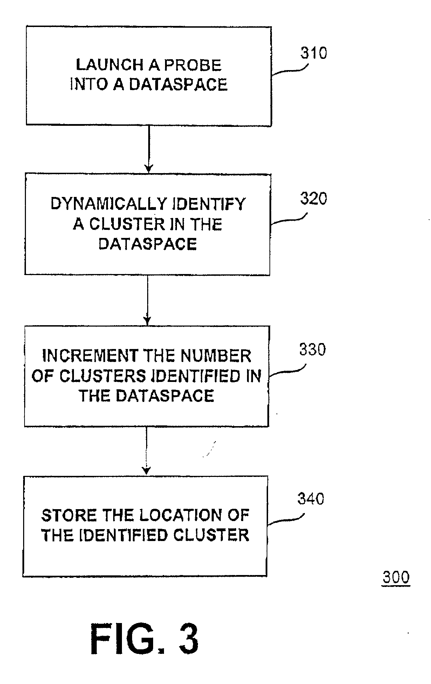

FIG. 3 illustrates an operation of an embodiment of the present invention. In an operation 310, probe 240 is launched into data space 200 from an initial position. In an operation 320, a cluster is dynamically identified by allowing data points 220 to attract probe 240 from the initial position to an equilibrium point. In an operation 330, once the equilibrium point is reached by probe 240, a number of clusters identified in data space 200 is incremented. In an optional operation 340, a location of the identified cluster is stored. In one embodiment, the equilibrium point is stored as a representation of the location of the identified cluster.

According to the present invention, after the cluster is identified, probe 240 is subsequently launched from a new initial position and operations 320-330 are repeated to identify other clusters in data space 200. The operations of launching probe 240 from new initial positions and identifying clusters in data space 200 are repeated until no unique clusters are identified. In this manner, the present invention identifies all the clusters in data space 200 without having any *a priori* knowledge or estimate of the number of the clusters therein.

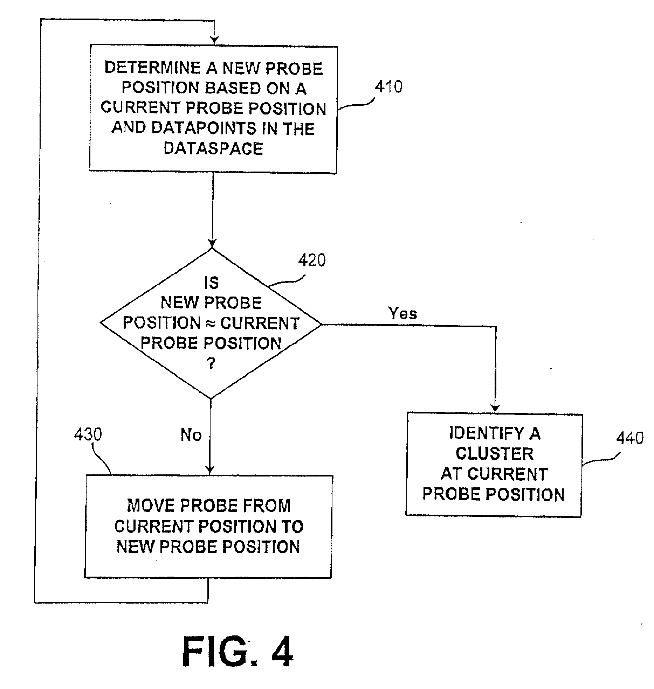

FIG. 4 illustrates an embodiment of operation 320 in further detail. In an operation 410, a new position for probe 240 is determined based on a current position of probe 240 and its relationship to data points 220 in data space 200. This determination may utilize various attractor or similarity functions. According to the present invention, various similarity functions may be used including force functions, coulomb force functions, power functions of radial distance, etc. In addition, dissimilarity functions (*i.e.*, the inverse of a similarity function one of which may be, for example, distance) may be used as would be apparent. Furthermore, dissimilarity functions may be tailored to a particular application based on characteristics of the data.

One class of similarity functions found to be useful in the present invention are Lyapunov functions, a class of functions whose properties include having a locally negative definite first derivative. For this class of similarity functions, the equilibrium point identified according to the present invention is actually a local minimum of the similarity function within data space 200.

In one embodiment of the present invention, a potential function is used. More specifically, this potential function is approximated by a product of a weight function and a quadratic function, namely:

$$\nu_j = R_j^2 / \exp(-R_j^2/(\quad^2))$$

where

$\nu_j$ is the potential between the probe and the $j$th data point,

$R_j$ is the dissimilarity/distance between the probe and the $j$th data point, and

$^2$ is an estimate of the noise variance associated with $R$.

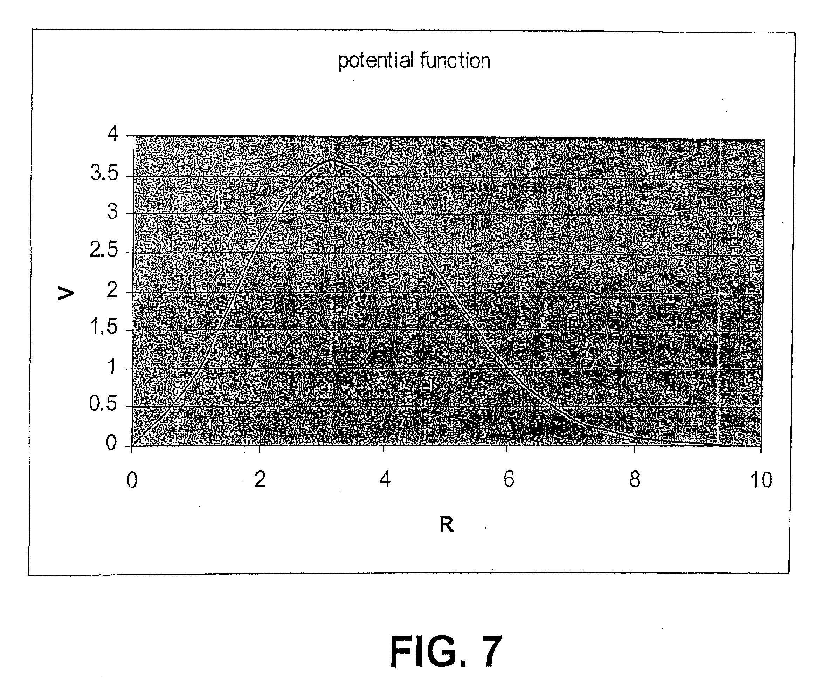

A plot of this potential function versus dissimilarity/distance is illustrated in FIG. 7, where a value of 5 is assumed for the noise variance associated with dissimilarity/distance, $R$. In one embodiment of the present invention, $R$, represents the Euclidean distance between the probe and the respective data point. This function requires an estimate of the noise variance of the particular measuring device used to collect the data associated with the corresponding data field 160. As would be apparent, the noise variance provides a measure of the uncertainty associated with the measurement.

According to the present invention, probe 240 is moved within data space 200 (*i.e.*, the position of probe 240 is adjusted) in order to minimize the sum of the potential funetian for each of the N data points 220 in data space 200, namely to minimize:

$$V = \sum_{j=1}^{N} \nu_j$$

In this embodiment of the present invention, probe 240 is moved within data space 200 in an effort to minimize the sum of the potential function, $V$, according to the following:

$$\mu_{k,t+1} = \frac{1}{A_t} \sum_{j=1}^{N} W_{j,t} x_{k,j}$$

where

$$A_t = \sum_{j=1}^{N} W_{j,t}$$

$$W_{J,t} = e\left(-2Z_j^2\right)$$

$$Z_j^2 = \frac{1}{2\sigma^2 M} \sum_{k=1}^{M} \left(x_{k,j} - \mu_k\right)^2$$

and where:

$k_{t+1}$    is the $k^{th}$ component of the new position of the probe at iteration $t+1$

$k_t$    is the $k^{th}$ component of the current position of the probe at iteration $t$

$x_{kj}$    is the $k^{th}$ component of the $j^{th}$ data point

$W_{j,t}$    is the weighting value for the $j^{th}$ data point at iteration $t$

$A_t$    is the sum of the weighting values over all data points at iteration $t$

$Z_j^2$    is the normalized Euclidean distance between the probe and the $j^{th}$ data point

$N$    is the number of data points and

$M$    is the number of data fields, or components, in each data point.

The function of similarity set forth above defines a force in a dynamic system such that a Lyapunov function exists.

Once the new probe position is determined, in a decision operation 420, the new probe position is compared with the current probe position to determine whether the probe has converged to an equilibrium point, or in this case, a local minimum, within data space 200. If the new probe position and the current probe position are approximately the same position (*i.e.*, the new probe position and the current probe position are within some predetermined distance of one another as would be apparent), a local minimum of the sum of potential functions has been reached. In an operation 440, a cluster is identified at that position, or alternately in some embodiments, at a position corresponding to the data point 220 nearest to that position for purposes of convenience. If the new probe position is not approximately the same position as the current probe position, in an operation 430, probe 240 is moved from the current probe position to the new probe position and processing continues at operation 410. As illustrated, operations 410, 420, and 440 are iteratively performed until the local minimum is reached and a cluster can be identified as in operation 430.

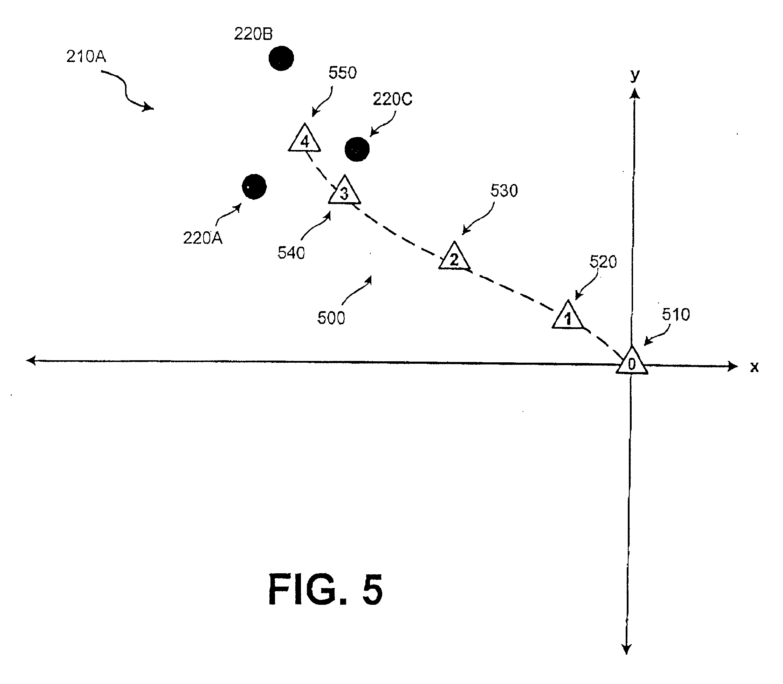

FIG. 5 illustrates a trajectory 500 of probe 240 as it moves through data space in accordance with the present invention. At an iteration t=0, probe 240 is launched from an initial position 510 as described above with respect to operation 310. After performing operations 410, 420, and 440 in an iteration t=1, probe 240 is moved from initial position 510 to a new position 520. Operations 410, 420, and 440 are again performed during an iteration t=2 resulting in probe 240 moving from position 520 to a new position 530. These iterations continue, moving probe 240 along trajectory 500 until, for example, a position 550 is reached. In accordance with the present invention, subsequent iterations do not substantially alter the position of probe 240. At this point in trajectory 500, a cluster is deemed identified. In one embodiment of the present invention, the position of the cluster may be identified as position 550, whereas in other embodiments of the present invention, the position of the cluster may be identified as the position of the nearest data point 220 (which as illustrated in FIG. 5 corresponds to data point 220C).

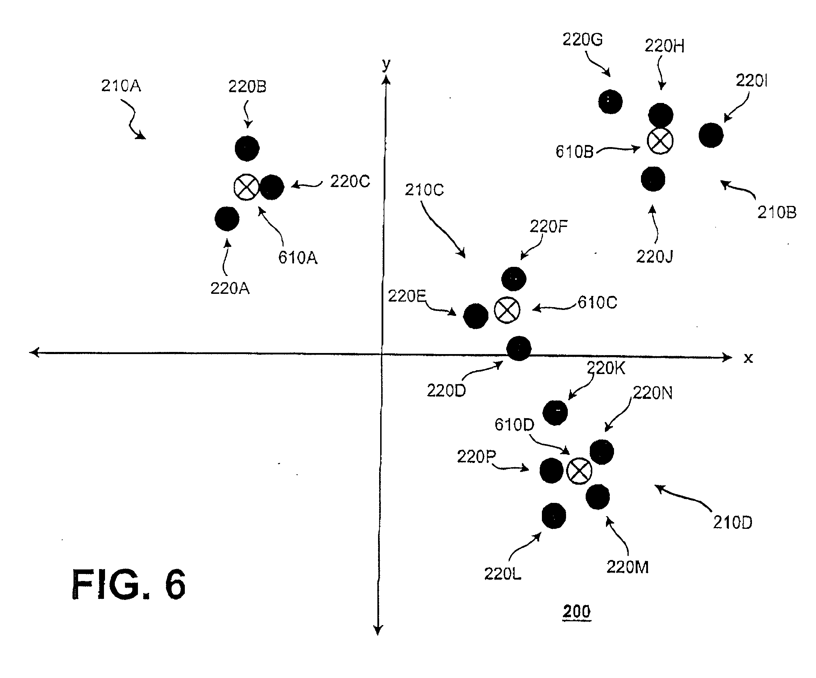

FIG. 6 illustrates data space 200 after having four clusters 210 (illustrated as clusters 210A-D) of related data identified therein. Also illustrated in FIG. 6 are final positions 610 (illustrated as final positions 610A-D) for each of clusters 210 according to one embodiment of the present invention.

Various embodiments of the present invention may employ different mechanisms for selecting an initial position from which to launch probe 240. Some of these mechanisms are described in further detail. In one embodiment of the present invention, probe 240 is launched from each possible position in data space 240. Such an exhaustive approach, while theoretically possible within a finite data space 240, may be computationally inefficient,

In another embodiment of the present invention, initial positions within a particular distance, range, or other non-Euclidean measure of "proximity," (*e.g.*, 1/ (similarity + 1)) of identified cluster 210, or similarly, within a particular proximity of final position 510, are not considered as initial positions from which to launch probe 240. Probes 240 launched within this particular proximity of either identified cluster 210 or final position 510 are likely to settle at that same identified cluster 210 or final position 510 rather than at a unique cluster. This proximity may be predetermined, fixed, or dynamically adjusted based on various characteristics of data points 220 in data space 200 as would be apparent.

In another embodiment of the present invention, initial positions within a particular proximity of trajectory 500 are not considered as initial positions from which to launch probe 240. Probes 240 launched within this particular proximity of trajectory 500 are likely to settle at the same cluster 210 or final position 510 associated with trajectory 500 and thus fail to identify a unique cluster within data space 200.

In another embodiment of the present invention, probes 240 are launched from data points 220. This embodiment of the present invention limits a number of possible initial positions for probe 240 to N, the number of data points 220 in data space 200. As a further embodiment of the present invention, the potential initial positions for probe 240 may be further reduced by assigning various data points 220 to the identified clusters 210 and not considering these assigned data points 220 as initial positions from which to launch probe 240. Data points 220 may be assigned to various clusters based on, for example, being within a certain proximity to cluster 210. Data points 220 may be assigned to clusters in other manners as would be apparent.

FIG. 6 is now used to further illustrate how initial positions may be selected in accordance with this embodiment of the present invention. Initially, probe 240 may be launched from data point 220A. From this probe, cluster 210A is identified. According to this embodiment of the present invention, data points 220A, 220B, and 220C may be assigned identified cluster 210A as being within a certain proximity of cluster 210A. These data points 220A-C would not subsequently be selected as initial positions for probe 240 because in all likelihood, the same cluster, namely cluster 210A, would be identified. As additional clusters 210 are identified, additional data points 220 are removed from consideration as potential initial positions for probe 240. In the example illustrated in FIG. 6, fifteen potential initial positions are available from which to launch probe 240 before any clusters 210 are identified. After cluster 210A is identified (and data points 220A-C assigned thereto), only twelve potential initial positions remain. The identification of cluster 210B would remove four additional potential initial positions from consideration. The identification of cluster 210C would remove three initial positions and the identification of cluster 210D would remove four initial positions from consideration. In this example and according to this embodiment of the present invention, launching four probes in data space 200 would be sufficient to identify all clusters 210 of related data therein.

In an alternate embodiment of the present invention, data points 220 may be assigned to clusters 210 using fuzzy logic, *i.e.*, a particular data point 220 may belong to a first cluster 210 to a certain degree (or probability) and to a second cluster to a certain degree (or probability). For example, as illustrated in FIG. 6, data point 220K may belong by varying degrees to each of clusters 210C and 210D as would be apparent.

Once a number of clusters 210 within a particular data space 200 (and hence within database 140) is dynamically determined by the present invention, various other conventional clustering techniques may be subsequently used to assign data points 220 to clusters 210. For example, the present invention may be used to dynamically determine the number of clusters 210 within database 140. This number may then be used as an input parameter to perform, for example, a conventional k-means clustering analysis.

The present invention as thus described has many applications for identifying potential relationships among data. One potential application of the present invention is as a tool for identifying relationships among gene expression profiles for a series of biological experiments. In this application, N gene expression profiles may be generated for each of a series of M biological experiments. Such profiles are routinely generated and stored in databases (*e.g.,* various experiments designed and performed with *Drosophila* microarrays). The present invention may be used to identify those clusters of genes that react in similar manners to the biological experiments. If a known gene is a member of the cluster, one can infer similar properties about the other genes in that cluster. By comparing the properties of clusters of a particular gene clone among different sets of experiments, one can infer that the gene is functionally variant, *e.g.*, a splice variant gene.

Another potential application of the present invention is as a tool for identifying similar or related records in a database (*e.g.*, mailing lists, etc.) Various companies compile demographic information associated with consumers and sell this information as lists to mail-order retailers for targeted advertising, catalogs, etc. Often times, information for the same individual may be obtained from multiple sources and therefor reside as multiple records within the retailer's database. Alternately, records may reside in the database that identify husband and wife in the same household. The mail-order retailer may wish to identify this related information so as to reduce the number of catalogs it sends to these consumers, *i.e.*, only send one copy of a catalog to an individual or household.

A mechanism for displaying the identified relationships that may exist among the data in a database is now described. According to the present invention, a linear display of one of data fields 160 versus its respective data point 150 is plotted. In one embodiment of the present invention, this so-called "principal data field" (*e.g.*, a component of interest, a user selected component, a component displaying greatest dynamic range either raw or normalized, a component displaying previously unknown or unquantified results, etc.) is sorted, its mean determined, and displayed in terms of its degree of deviation from the mean. In other embodiments of the present invention, a "score" or other scalar is computed using several data fields as would be apparent.

In some embodiments of the present invention, the degree of deviation may be displayed as a first color for positive deviations and as a second color for negative deviations. The relative intensity or brightness of the color displayed may also correspond to the degree of the deviation, *i.e.,* a bright color may correspond to a data value with a greater deviation from the mean than that of a dark color.

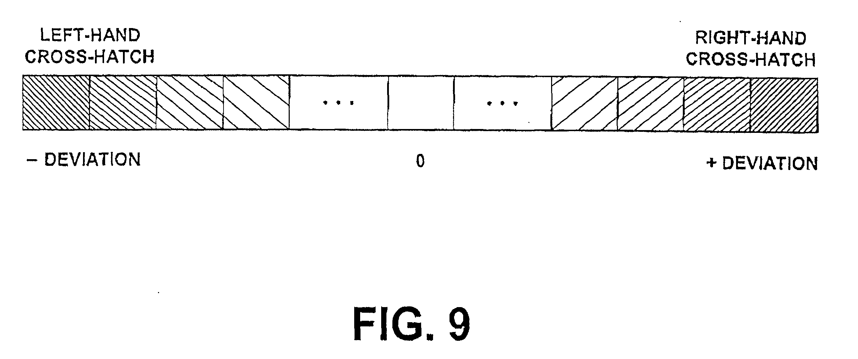

In an alternate embodiment of the present invention, cross-hatching rather than color may be used with "left-band" cross-hatching corresponding to negative deviations and "right-hand" cross-hatching corresponding to positive deviations. The relative density of the cross-hatching may correspond to the degree of the respective deviations. FIG. 9 illustrates this embodiment in further detail.

Two colors with varying intensity and two forms of cross-hatching with varying density represent two indicia that may be used to convey a relative degree (value) and direction (sign) of a parameter to a user. Other indicia may be used as would be apparent. Furthermore, to the extent that either degree or direction is unnecessary, only a portion of the indicia would be necessary as would also be apparent. For example, if only the direction or sign of the deviation was relevant, both colors might be used without varying their intensity. Likewise if only the degree of deviation was relevant, only one color of varying intensity might be used.

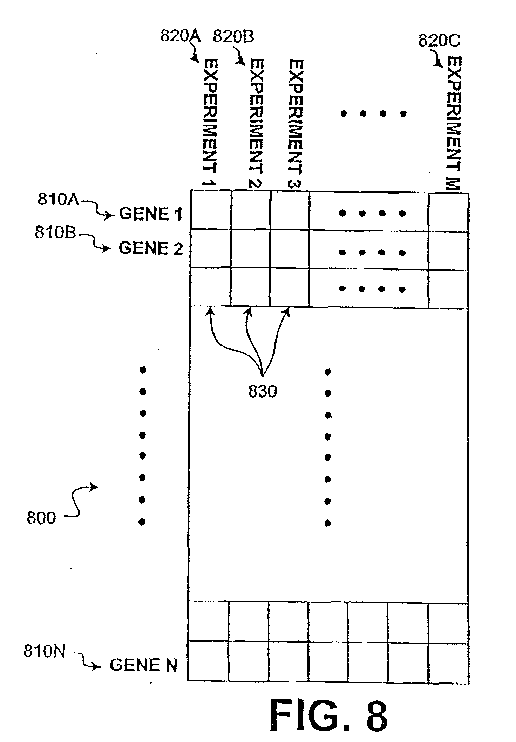

The linear display of the present invention may be extended across multiple "principal data fields." For example, FIG. 8. illustrates a linear display 800 of a principal data field 830 as it varies across data points 810 as well as another independent parameter 820. Linear display 800 provides a visual indication of how data fields 830 deviate from a mean associated each data field 830 as well as across independent parameter 820.

In this example, each data point 810 corresponds to a particular gene 810 (illustrated in FIG. 8 as "GENE 1" 810A, "GENE 2" 810B, etc., and "GENE N" 810N) being analyzed while independent parameter 820 corresponds to a particular experiment 820 (illustrated in FIG 8 as "EXPERIMENT 1" 820A, "EXPERIMENT 2" 820 B, etc., and "EXPERIMENT M" 820 M) conducted across all genes 810. In this example, principal data field 830 corresponds to an expression of the particular gene 810 during the particular experiment 820.

In one embodiment of the present invention, linear display 800 is rendered by first computing a mean of the expression of each gene 810 for each experiment 820, selecting one of experiments 820, and sorting genes 810 based on a degree of deviation in expression for the selected experiment. In an alternate embodiment of the present invention, rather than selecting one of the experiments of which to base the sort, a measure, or "score" of the collective degree of deviation in expression is determined for each gene 810 across the M experiments 820 (or some subset thereof) and this measure may provide the basis for sorting genes 810. Various measures are available, for example, a sum of the deviations for each of the experiments, or other such linear transformations of the data, as would be apparent. Such a linear display 800 might be useful for determining which genes 810 increase (or decrease) in expression based on a set of conditions associated with experiments 820.

In one embodiment of the present invention, genes 810 that demonstrate a greater degree of increased expression across all experiments 820 would tend toward the top of linear display 800 whereas genes 810 that demonstrate a greater degree of decreased expression across all experiments 820 would tend toward near the bottom. Furthermore, genes 810 that demonstrate little change in expression or some degree of increase in expression for some experiments 820 and some degree of decrease in expression for other experiments 820 would tend toward the middle of middle of linear display 800.

### *Conclusion*

While various embodiments of the present invention have been described above, it should be understood that they have been presented by way of example only, and not limitation. Thus, the breadth and scope of the present invention should not be limited by any of the above-described exemplary embodiments, but should be defined only in accordance with the following claims and their equivalents.

The previous description of the preferred embodiments is provided to enable any person skilled in the art to make or use the present invention. While the invention has been particularly shown and described with reference to preferred embodiments thereof, it will be understood by those skilled in the art that various changes in form and details may be made therein without departing from the spirit and scope of the invention.

### Claims

1. A method for dynamically identifying clusters of related data comprising:

   launching a probe from a fist position in an M-dimensional space, said M-dimensional space having a plurality of data points, each of said plurality of data points associated with a data record, each data record having at least M number of data fields;
   determining a new position for said probe in said M-dimensional space based on a current position of said probe relative to at least a portion of said plurality of data points in said M-dimensional space;
   moving said probe from said current position to said new position;
   repeating said determining a new position for said probe until said new position and said current position are approximately a same position;
   dynamically identifying a cluster upon determining said same position in said M-dimensional space.

2. The method of claim 1, further comprising launching another probe from another position in said M-dimensional space to initiate identification of another cluster in said M-dimensional space.

3. The method of claim 1, wherein said launching another probe from another position comprises randomly determining said another position in said M-dimensional space.

4. The method of claim 1, wherein said launching another probe from another position comprises determining said another position in said M-dimensional space outside a predetermined proximity from a previous probe trajectory.

5. The method of claim 1, wherein said launching another probe from another position comprises determining said another position in said M-dimensional space beyond a predetermined proximity from said identified cluster.

6. The method of claim 1, wherein said launching another probe from another position comprises determining said another position as one of said plurality of data points.

7. The method of claim 1, wherein said launching another probe from another position comprises determining said another position in said M-dimensional space as one of said plurality of data points that is outside of a predetermined proximity from a previous probe trajectory and beyond a predetermined proximity from said identified cluster.

8. The method of claim 1, wherein said determining a new position for said probe comprises applying a localized force function to said probe.

9. The method of claim 8, wherein said determining a new position for said probe comprises applying a localized coulomb force function to said probe.

10. The method of claim 8, wherein said determining a new position for said probe comprises applying a localized force function to said probe, said force function based on a radial distance between said probe and each of said plurality of data points.

11. The method of claim 8, wherein said determining a new position for said probe comprises applying a potential function to said probe.

12. The method of claim 8, wherein said determining a new position for said probe. comprises applying a potential function to said probe, said potential function based on at least one of a weight function and a quadratic function.

13. The method of claim 12, wherein said applying a potential function to said probe comprises applying a product of a weight function and a quadratic function.

14. The method of claim 13, wherein said applying a potential function to said probe comprises applying a potential function of the form $V=R^2*\exp(-R^2/2\ ^2)$, where "V" is the potential between said probe and one of said plurality of data points, "R" is the distance in said M-dimensional space between said probe and said one of said plurality of data points, and " $^2$" is an estimate of noise variance associated with said plurality of data points.

15. The method of claim 11, further comprising minimizing a sum of said potential functions applied to each of said at least a portion of said plurality of data points.

16. The method of claim 15, wherein said minimizing a sum of said potential functions comprises minimizing a sum of said potential functions applied to each of said plurality of data points.

17. A method for dynamically identifying a number of clusters of related data from a plurality of data records each having a plurality of data fields, the data represented as N data points in an M-dimensional space where M is less than or equal to a number of the plurality of data fields and N is less than or equal to a number of the plurality of data records, the method comprising:

initializing a current position of a data probe as a first position in the M-dimensional space; determining a new position for said data probe in the M-dimensional space based on a similarity between said data probe as indicated by said current position and at least a portion of the N data points in the M-dimensional space; adjusting said current position of said data probe to said new position; repeating said determining a new position and said adjusting said current position until said new position and said current position are approximately a same position; and once said new position and said current position are approximately said same position, incrementing a count of the number of clusters of related data.

18. The method of claim 17, further comprising:

reinitializing a current position of said data probe as a second position in the M-dimensional space, said second position different from said first position.

**19.** The method of claim 18, further comprising:

    repeating said determining a new position and said adjusting said current position until said new position and said current position are approximately a second same position.

**20.** The method of claim 19, further comprising:

    if said second same position is a unique same position, then incrementing said count of the number of clusters of related data.

**21.** The method of claim 18, wherein said reinitializing a current position of said data probe as a second position comprises selecting said second position as one of said plurality of data points.

**22.** The method of claim 18, wherein said reinitializing a current position of said data probe as a second position comprises selecting said second position from one of said N data points.

**23.** The method of claim 18, wherein said reinitializing a current position of said data probe as a second position comprises selecting said second position from outside a previous probe trajectory.

**24.** The method of claim 17, wherein said determining a new position for said data probe in said M-dimensional space comprises determining a relative distance between said data probe and one of the N data points.

**25.** The method of claim 17, wherein said determining a new position for said data probe in said M-dimensional space comprises determining a relative distance between aid data probe and each of said at least a portion of the N data points.

EP 1 310 885 A2

| | | DATA 1 | FIELD 1 | FIELD 2 | . . . . | FIELD M |
| | | DATA 2 | FIELD 1 | FIELD 2 | . . . . | FIELD M |
| | | . . . . | . . . . | . . . . | . . . . | . . . . |
| | | . . . . | . . . . | . . . . | . . . . | . . . . |
| | | DATA N | FIELD 1 | FIELD 2 | . . . . | FIELD M |

**FIG. 1**

FIG. 2

EP 1 310 885 A2

LAUNCH A PROBE
INTO A DATASPACE — 310

DYNAMICALLY IDENTIFY
A CLUSTER IN THE
DATASPACE — 320

INCREMENT THE NUMBER
OF CLUSTERS IDENTIFIED IN
THE DATASPACE — 330

STORE THE LOCATION OF
THE IDENTIFIED CLUSTER — 340

300

# FIG. 3

EP 1 310 885 A2

DETERMINE A NEW PROBE
POSITION BASED ON A
CURRENT PROBE POSITION
AND DATAPOINTS IN THE
DATASPACE

410

IS
NEW PROBE
POSITION ≈ CURRENT
PROBE POSITION
?

420

Yes

IDENTIFY A
CLUSTER
AT CURRENT
PROBE POSITION

440

430

No

MOVE PROBE FROM
CURRENT POSITION TO
NEW PROBE POSITION

# FIG. 4

FIG. 5

FIG. 6

200

EP 1 310 885 A2

FIG. 7

EP 1 310 885 A2

FIG. 8

LEFT-HAND CROSS-HATCH            RIGHT-HAND CROSS-HATCH

− DEVIATION          0          + DEVIATION

## FIG. 9